# EUROPEAN PATENT SPECIFICATION

(11) **EP 2 369 790 B1**
(45) Date of publication and mention of the grant of the patent: **29.07.2015**
(21) Application number: 10003124.4
(22) Date of filing: 24.03.2010
(51) Int. Cl.: H04L 12/437, H04L 12/40

(54) **Communication device**
Kommunikationsvorrichtung
Dispositif de communication

(43) Date of publication of application: 28.09.2011
(73) Proprietor: WAGO Kontakttechnik GmbH & Co. KG, 32423 Minden (DE)
(72) Inventor: Di Matteo, Serge, 32457 Porta Westfalica (DE); Lehzen, Michael, 32425 Minden (DE); Kirste, Hans-Herbert, 31628 Landesbergen (DE)
(74) Representative: Hess, Peter K. G.

(56) References cited:
- EP-B1- 1 609 273
- DE-A1-102006 018 884

## Description

The invention relates to a communication device for data communication over a communication bus comprising at least one data input bus connector provided for receiving data from the communication bus and each forming a data source, at least one data output bus connector provided for transmitting data over the communication bus each forming a data sink and at least one data handling unit comprising at least one data input, each forming a data sink and at least one data output, each forming a data source.

Such communication devices are known for example for programmable logic controllers (PLCs) or process monitoring systems and are described e.g. in DE 44 02 002 A1. System modules which each have a dedicated housing having electrical connection terminals which are accessible from the outside are plugged onto a common top-hat rail. The system modules are arranged adjacent to another on the top-hat rail associated electrical contact terminals of mutually adjoining system modules being connected to one another. In this manner, voltage supply lines are realised, via which voltage is supplied to the connected system modules starting from a regulated switched mode power supply (voltage supply module) which is generally arranged on the left-hand side on the top-hat rail. In a corresponding manner, a system bus is realised by the electrical contact terminals which is fed via a field bus coupling module from the left-hand side. The field bus coupling module is used for coupling the internal system bus to an external field bus.

The advantage of this first design is that the line length of the supply lines and the system bus is determined by the system modules themselves, and no separate lines are required.

A second design which is described for example in D. Tschimpke. "Flexibilität zahlt sich aus", in: elektro Automation, 04/2005, pp. 2+ 3, envisages that the system bus and/or the voltage supply lines are implemented on the top-hat rail. The system modules have contact pins for making contact with the system bus lines and voltage supply lines. However, this has the disadvantage that the top-hat rails are relatively complex and the line length is not matched optimally to the actually required line length. This may result in unnecessary attenuation losses. In addition, the system bus lines and voltage supply lines are accessible from the outside and are subject to a potential risk of interference.

In the implementation of the system bus using the first design with connection terminals at the communication devices for the further connection of the system bus to an adjacent communication device, there is the problem that the system bus is interrupted by a communication device in a sequence of communication devices being removed.

Hot-swappable systems are required for automating processes in which the replacement of individual electronic components should not result in the entire system coming to a stand-still. The reason for the replacement may be a defect in an individual electronic component or the need for a modification.

EP 1 089 190 A2 discloses a method for coupling a redundant communication bus comprising at least two bus lines to a single line of a non-redundant communication bus. A connection device is connected to the at least two bus lines of the redundant bus and the single line of the non-redundant bus. The connection device is provided to connect the active line of the redundant bus to the single line of the non-redundant peripheral bus.

WO 00/62478 discloses a bus system which is interconnected into a ring-type-structure on a coupling module for redundancy reasons. A line topology of the bus is configured by an isolating point in the coupling module. A monitoring device situated in the coupling module monitors a bus for conforming states on both sides of the isolating point which in case of non-conformance is closed by means of a controllable switching device.

DE 10 2006 018 884 A1 discloses a slave unit comprising bidirectional ports for a ring bus and a processor. By use of a first multiplexer, the input of the processor can be connected either to the input for receiving data either of the input port or the output port of the slave device. By use a second multiplexer, the output of the processor can be directed to the output for transmitting data of the input port instead of transferring the receiving data of the output port to the transmitting data connection of the input port.

Object of the present invention is to provide an improved communication device for data communication over a communication bus, which allows a secure and flexible use in a communication system.

The object is achieved by the communication device comprising the features of claim 1.

Each of the data output bus connectors is connected to the output of a conjugated multiplexer, wherein one multiplexer is assigned to one data sink and that every data source is connected to the input of each of said multiplexer, so that each of the data sources can be selectively connected to each of the output bus connectors by control of the at least one multiplexer.

The multiplexers provided for each of the data output bus connectors of the communication device provide a flexible control to transfer data from a selected data source to a selected data output bus connector assigned to a multiplexer. The effect that each data source provided by the data input bus connectors and the data handling units of the communication device are connected to the input ports of each of the multiplexers allows a flexible control of the communication device under many con trol states. Especially a high reliable hot-swappable communication system can be realised by use of the communication device according to the present invention.

In a preferred embodiment, each of the data sink is connected to the output of a conjugated multiplexer, wherein one multiplexer is assigned to one data sink. Further, every data source is connected to the input of each of said multiplexers, so that each of the data sources can be selectively connected to each of the output bus connectors by control of the at least one multiplexer.

The provision of multiplexers not only for the data output bus connectors, but for each of the data sinks of the communication device, i.e. the data sinks of the data handling units and the bus connectors, allows a higher flexibility in the use of the communication device. The multiplexers provide a flexible connection of the data handling units to each of the data output bus connectors and data input bus connectors.

In a preferred embodiment, at least one of the data handling units is a shift register provided for serial transferring digital data transmitted on the communication bus from a data input bus connector through the shift register to a data output bus connector.

The shift register is provided for leading data through the communication device and forwarding the data to the adjacent communication device. Such a design is commonly used in control systems comprising a plurality of input-/output-modules communicating with each other and a field bus coupler via a serial bus in ring topology.

A communication device which can be an input-/output-module or a field bus coupler etc. is provided for serial communicating with preceding and succeeding communication devices by connection to a downstream line and to an upstream line of the communication bus established in ring topology. In the communication device of the present invention,
- a first data handling unit is a downstream line shift register comprising a data input forming a data sink and a data output forming a data source;
- a second data handling unit is an upstream line shift register comprising a data input forming a data sink and a data output forming a data source;
- a data processing unit is connectable to the first and second data handling unit for receiving or transmitting digital data in a data stream communicated over the communication bus;
- a first multiplexer is provided comprising one output port and at least four input ports, the output port of the first multiplexer being connected to the input of the first shift register and the output of the first and second shift register and the input bus connectors for the downstream line and the upstream line each being connected to a respective input port of the first multiplexer;
- a second multiplexer is provided comprising one output port and at least four input ports, the output port of the second multiplexer being connected to the input of the second shift register, and the output of the first and second shift register and the input bus connectors for the downstream line and the upstream line each being connected to a respective input port of the second multiplexer;
- a third multiplexer is provided comprising one output port and at least four input ports, the output port of the third multiplexer being connected to the output bus connector for the downstream line of the communication bus, and the output of the first and second shift register and the input bus connectors for the downstream line and the upstream line each being connected to a respective input port of the third multiplexer;
- a fourth multiplexer is provided comprising one output port and at least for input ports, the output port of the fourth multiplexer being connected to the output bus connector for the upstream line of the communication bus, and the output of the first and second shift register and the input bus connectors for the downstream line and the upstream line each being connected to a respective input port of the fourth multiplexer.

By control of the four multiplexers of this communication device, at least the following control states of the communication device can be achieved:

First, the data of the downstream line on the downstream input bus connector are fed through the downstream shift register to the downstream output bus connector. Further, the data on the upstream line are fed from the upstream input bus connector through the upstream shift register to the upstream output bus connector (normal state).

In a hot-swap-state, the downstream and upstream lines can be changed. Then the data of the former downstream input bus connectors are fed through the fourth multiplexer to the upstream shift register and from there through the third multiplexer to the former downstream output bus connector. Thus, the former downstream input and output bus connectors are used for the upstream line, since the input and output bus connectors are connected to the upstream shift register, which is used by the additional logic of the communication device for transmitting and processing data of the upstream line of the communication bus.

Similar, the former upstream input bus connector is connected to the downstream shift register by use of the first multiplexer, and the output of the downstream shift register is connected to the former upstream output bus connector by use of the fourth multiplexer.

In another state, the downstream input bus connector can be connected to the upstream output bus connector and the upstream input bus connector can be connected to the downstream output bus connector. Then, the communication device can be used as an end device of a sequence of communication devices to form a communication bus in ring topology.

In another state, a direct connection can be provided, wherein the upstream input bus connector is directly connected to the upstream output bus connector and the downstream input bus connector is directly connected to the downstream output bus connector. Thus, the control device can be deactivated and the only function is to lead data from one side to the other.

In another state, the downstream shift register can be connected to the upstream shift register, so that the communication device can be used as an end device to form a communication bus in ring topology without need of any additional wire connection of the downstream output bus connector and the upstream input bus connector.

In a preferred embodiment, the communication device comprises a digital processing unit being connected to control inputs of the multiplexers for selectively connecting data sources of the communication device to selected data sinks of the communication device by control of the data processing unit. The communication device can be an input/output-device provided for use in a programmed control system for monitoring and control of automating systems, wherein the input/output-devices are connected to a field bus coupler via a system bus.

The communication device can also be a field bus coupler for controlling data communication over the internal communication bus provided for communication with input/output-devices. The field bus coupler is connected with associated communication devices over the internal communication bus and communicates with superior control devices, which are connectable to the field bus coupler via field bus.

In a preferred embodiment, the communication device comprises a housing including a base and two opposing sides. Said base comprising clamps for mechanically connecting the housing to a top-hat rail abutting to said communication device. The advantage of this design is that the communication bus is formed automatically when placing a plurality of communication devices on a top-hat rail one adjacent to the other. No additional wiring is required.

The communication device can be provided for permuting the downstream line and the upstream line of the communication bus in case that a disconnection of the communication bus is detected. The last communication device in a sequence of communication devices, which are connected to each other by the communication bus, is connected to the first communication device of the sequence of the communication devices. The connection can be implemented by use of flying wires. The advantage of the connection of the first and last communication device is that in case of disruption of the communication bus the first communication device can still communicate with all the remaining communication devices. The reason is that a second communication bus can be established via the flying wires. By use of the multiplexers, the upstream line and downstream line of the sequence of communication devices following to the place of interruption of the system bus are changed so, that the former downstream line becomes an upstream line starting from the place of disruption of the communication bus to the last communication device and the first communication device. The former upstream line becomes a downstream line starting from the first communication device directly to the last communication device via the flying wire and from there to the place of disruption of the system bus.

When a disruption is recognised, the communication devices adjacent to the place of disruption are controlled by use of the multiplexers so that the upstream line and downstream line are directly connected to each other to form a ring bus.

The invention is disclosed in the following by way of examples with the enclosed drawings. It shows
- Figure 1: - a block diagram of a communication system comprising a plurality of communication devices connected to each other by use of a communication bus;
- Figure 2: - a block diagram of a preferred embodiment of a communication device comprising multiplexers and data handling units;
- Figure 3 a) - e): - block diagrams of communications systems working in different modes of operation.

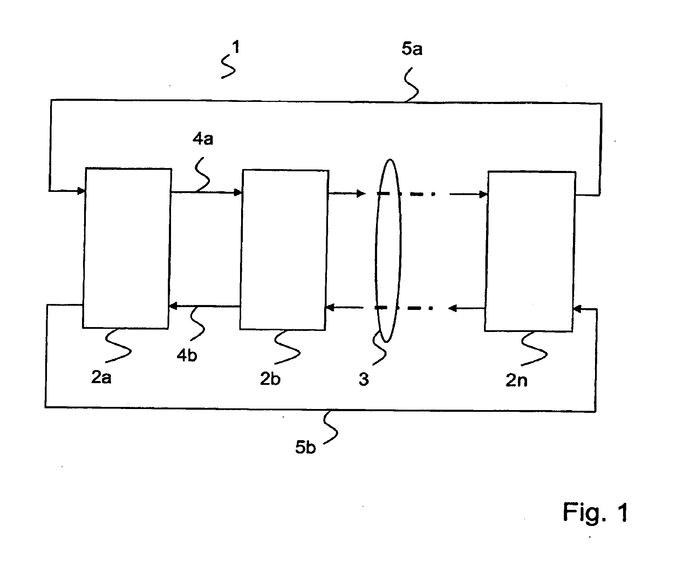

Figure 1 shows a block diagram of a communication system 1 comprising a plurality of communication devices 2a, 2b, 2c, ..., 2(n-1), 2n connected to each other by use of a communication bus 3. The communication bus 3 comprises a downstream line 4a and an upstream line 4b. The downstream line 4a is provided for transmitting data from the first communication device 2a of the sequence of communication devices 2a..., 2n to the last communication device 2n. Accordingly, the upstream line 4b is provided to transmit data from the last communication device 2n of the sequence of communication devices 2a, ..., 2n to the first communication device 2a. The first communication device 2a is connected to the last communication device 2n by use of flying wires 5a, 5b allowing a direct communication of the first communication device 2a with the last communication device 2n without use of the communication bus 3. Then, the communications system 1 runs securely even if a communication device 2a, ..., 2n is removed from the communication bus 3, so that a disruption of the communication bus 3 occurs. Further, the communication system 1 runs securely in many other cases of disruption. Thus, the communication is hot-swappable.

The reason for the Hot-Swap-functionality of the communication system 1 is that a second communication bus using flying wires 5a and 5b can be established by use of multiplexers of the communication device, which runs from the first communication device 2a to the last communication device 2n using flying wires 5a and 5b through the remaining communication bus 3 from the right to the left hand side until the place of disruption of the communication bus 3, i.e. the communication device that has been removed. The first communication bus 3 runs from the first communication device 2a to the right hand side of the sequence of communication devices 2 to the place of disruption of the communication bus 3, i.e. the communication device that has been removed.

Thus, the flying wires 5a, 5b are provided for communicating data from the first communication device 2a to the last communication device 2n directly in order to establish a second communication bus.

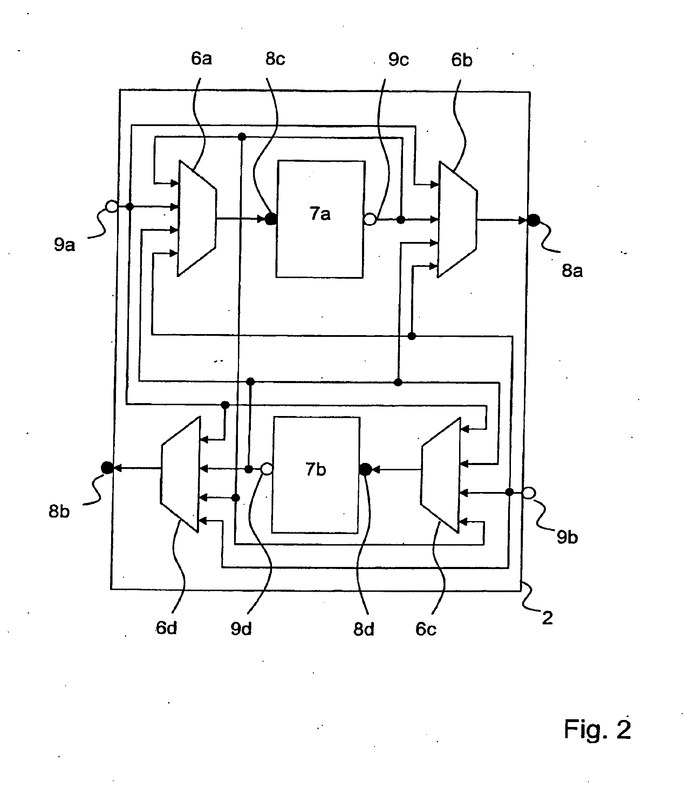

Figure 2 shows a block diagram of a preferred embodiment of a communication device 2 comprising multiplexers 6a, 6b, 6c, 6d and a downstream data handling unit 7a and an upstream data handling unit 7b. The data handling units 7a, 7b are shift registers, which are provided for a serial throughput of the digital data stream through the data communication device 2. The input of the shift register 7a, 7b work as a data sink and the output of the shift register 7a, 7b work as a data source.

The shift registers 7a, 7b are, according to the art, connected to further data processing units (not shown) in order to take selected data out of the data stream shifted through the shift register 7a, 7b for further processing, or in order to introduce data into a data stream, which is shifted through the shift registers 7a, 7b for transmittal to other communication devices 2. Many communication standards assign specific time slots to a communication device 2, in which data of the data stream are provided to the assigned communication device. Further the communication device 2 is allowed to amend the bit sequence of a data stream in the respective time slots of an assigned communication device 2. In the communication process, a sequence of data comprising information for all of the sequence of communication devices 2a, ..., 2n are led through the chain of communication devices 2a, ..., 2n and the respective shift registers 7.

According to the present invention, each of the data output bus connectors 8a, 8b are connected to the output of a conjugated multiplexer 6b, 6d. One multiplexer 6 is assigned to exact one data sink. Further, every data source 9a, 9b, 9c, 9d is connected to the input of each of said multiplexers 6b, 6d, so that each of the data sources 9a, 9b, 9c, 9d can be selectively connected to each of the output bus connectors 8a, 8b by control of the multiplexers 6b, 6d.

Further, a first multiplexer 6a and a second multiplexer 6c is connected to the input of the downstream shift register 7a and the upstream shift register 7b, respectively. Thus, a first multiplexer 6a, 6c is assigned to the data sink of the shift register 7a and a second multiplexer 6a, 6c is assigned to the data sink of the shift register 7b. Further, every data source 8a, 8b, 8c, 8d is connected to the input of the first and second multiplexer 6a, 6c, so that each of the data sources 8 can be selectively connected to each of the output bus connectors 8a, 8b and the inputs of the shift registers 7a, 7b by control of the four multiplexers 6a, 6b, 6c, 6d.

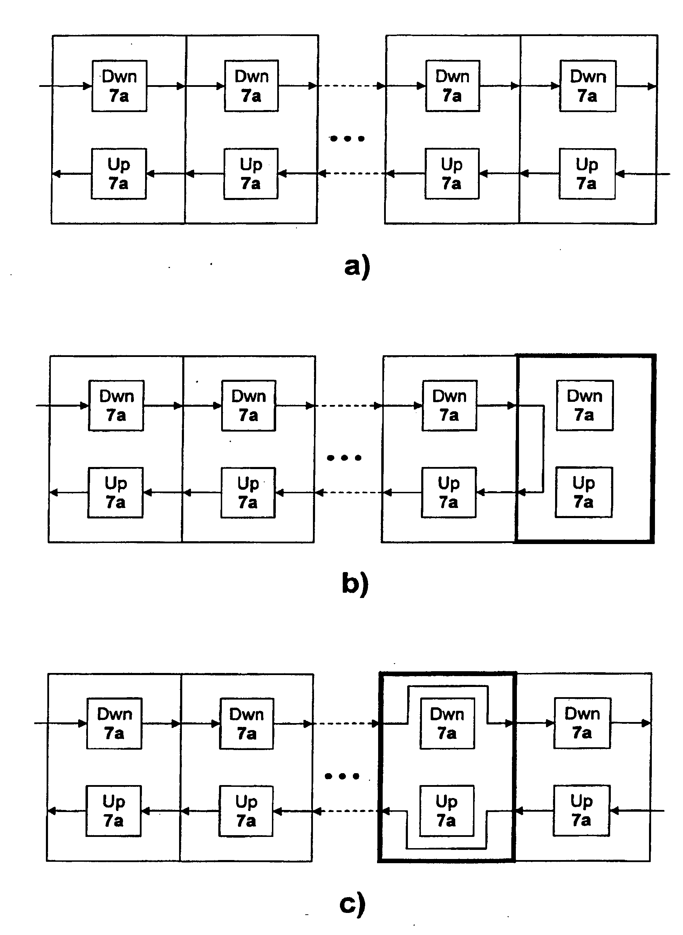

By control of the four multiplexers 6 of the communications device 2 five main control states of the communication device 2 can be achieved, which are shown in Figure 3a) to 3e):

### a) Normal mode (Figure 3a)):

The data of the downstream line 4a of the system bus 3 can be fed through the downstream input bus connector 9a via the first multiplexer 6a to the downstream shift register 7a. The output of the downstream shift register 7a is connected to the downstream output bus connector 8a by use of the third multiplexer 6b.

In the upstream channel, the upstream line 4b of the communication bus 3 is connected to the upstream shift register 7b via the upstream input bus connector 9b and the second multiplexer 6c. The output of the upstream shift registered 7b is connected to the upstream output bus connector 8b via the fourth multiplexer 6d.

### b) End module bypass mode (Figure 3b)):

A bypass can be provided by connecting the downstream input connector 9a to the upstream output bus connector 8b using the fourth multiplexer 6d. Further, the upstream input bus connector 9b can be directly connected to the downstream output bus connector 8a by use of the third multiplexer 6b. The end module bypass mode is used e.g. for system measurements or when no data exchange is required with the communication device 2.

### c) Repeater mode (Figure 3c)):

A direct connection of the downstream bus connectors 8a, 9a and the upstream bus connectors 8b, 9b respectively can be provided by use of the third and forth multiplexer 6b, 6d. Then the downstream input bus connector 9a is directly connected to the downstream output bus connector 8a and the upstream input bus connector 9b is directly connected to the upstream output bus connector 8b. In this state, the communication device 2 has no further function.

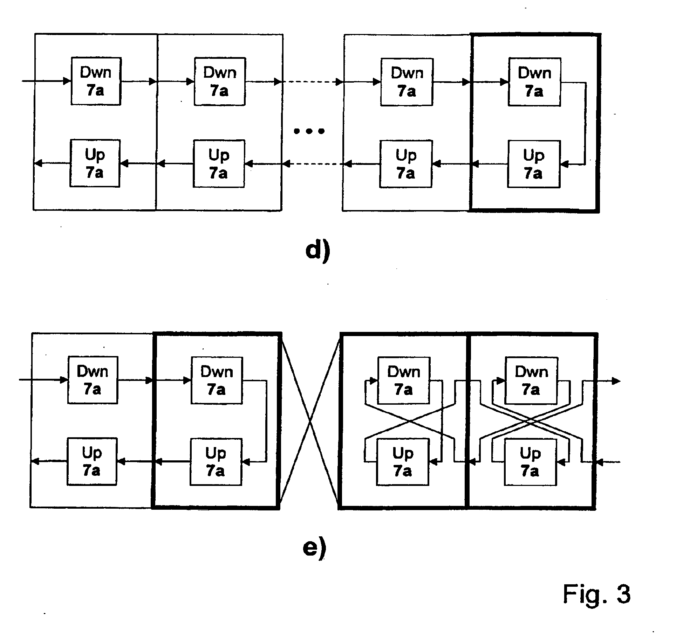

### d) Last module mode (Figure 3d)):

In another state, a communication device 2 can be switched to form an end device of a sequence of communication devices 2a, ..., 2n. Then, the data runs from the downstream line 4a through the downstream shift register 7a via the second multiplexer 6c and the upstream shift register 7b to the upstream bus connector 8b. In this state, the communication device 2 can still perform its functionality by use of further processing units (not shown) which are connected in a well known manner to the downstream and upstream shift register. In this state, no wire connection of the downstream output bus connector 8a to the upstream input bus connector 9b is required. Thus, the wire connection is provided by use of the third multiplexer 6c connecting the output (data source) of the downstream shift register 7a to the input (data sink) of the upstream shift register 7b.

### e) Hot Swap mode (Figure 3e)):

In a hot-swap-state, the downstream and upstream lines can be changed. Then the data of the former downstream input bus connectors 9a are fed through the fourth multiplexer 6c to the upstream shift register 7b and from there through the third multiplexer 6b to the former downstream output bus connector 8a. Thus, the former downstream input and output bus connectors 9a, 8a are used for the upstream line, since the input and output bus connectors 9a, 8a are connected to the upstream shift register 7b, which is used by the additional logic of the communication device 2 for transmitting and processing data of the upstream line of the communication bus.

Similar, the former upstream input bus connector 9b is connected to the downstream shift register 7a by use of the first multiplexer 6a, and the output of the downstream shift register 7a is connected to the former upstream output bus connector 8b by use of the fourth multiplexer 6d. Thus, the downstream and upstream paths are fed over cross to each other.

## Claims

1. Communication device (2) for data communication over a communication bus (3), comprising at least one data input bus connector (9a, 9b) provided for receiving data from the communication bus (3) and each forming a data source, at least one data output bus connector (8a, 8b) provided for transmitting data over the communication bus (3) and each forming a data sink, at least one data handling unit (7a, 7b) comprising at least one data input each forming a data sink, at least one data output each forming a data source, and a plurality of multiplexers (6) wherein each of the data output bus connectors (8a, 8b) are connected to the output of a conjugated multiplexer (6) and wherein one multiplexer (6) is assigned to one data sink, **characterized in that** every data source is connected to the input of each of said plurality of multiplexers (6), so that each of the data sources can be selectively connected to each of the output bus connectors (8a, 8b) by control of at least one of the plurality of multiplexers (6), said communication device (2) being provided for communicating with preceding and succeeding communication devices (2) by connection to a downstream line (4a) and to an upstream line (4b) of the communication bus (3) established in ring topology, wherein
- a first data handling unit (7a) is a downstream line shift register comprising a data input forming a data sink and a data output forming a data source,
- a second data handling (7b) unit is an upstream line shift register comprising a data input forming a data sink and a data output forming a data source,
- a data processing unit is connectable to the first and second handling unit (7a, 7b) for receiving or transmitting digital data in a data stream communicated over the communication bus (3),
- a first multiplexer (6a) is provided comprising one output port and at least four input ports, the output port of the first multiplexer (6a) being connected to the input of the first data handling unit (7a) and the output of the first and second data handling unit (7a, 7b) and the input bus connectors (9a, 9b) for the downstream line (4a) and the upstream line (4b) each being connected to a respective input port of the first multiplexer (6a),
- a second multiplexer (6c) is provided comprising one output port and at least four input ports, the output port of the second multiplexer (6c) being connected to the input of the second data handling unit (7b) and the output of the first and second data handling unit (7a, 7b) and the input bus connectors (9a, 9b) for the downstream line (4a) and the upstream line (4b) each being connected to a respective input port of the second multiplexer (6c),
- a third multiplexer (6b) is provided comprising one output port and at least four input ports, the output port of the third multiplexer (6b) being connected to the output bus connector (8a) for the downstream line (4a) of the communication bus (3), and the output of the first and second data handling unit (7a, 7b) and the input bus connectors (9a, 9b) for the downstream line (4a) and the upstream line (4b) each being connected to a respective input port of the third multiplexer (6b),
- a fourth multiplexer (6d) is provided comprising one output port and at least four input ports, the output port of the fourth multiplexer (6d) being connected to the output bus connector (8b) for the upstream line (4b) of the communication bus (3), and the output of the first and second data handling unit (7a, 7b) and the input bus connectors (9a, 9b) for the downstream line (4a) and the upstream line (4b) each being connected to a respective input port of the fourth multiplexer (6d).

2. Communication device (2) according to claim 1, **characterised in, that** each of the data sink is connected to the output of a conjugated multiplexer (6), wherein one multiplexer (6) is assigned to one data sink and that every data source is connected to the input of said multiplexers (6) so that each of the data sources can be selectively connected to each of the output bus connectors (8a, 8b) by control of the at least one multiplexer (6).

3. Communication device (2) according to claim 1 or 2, **characterised in that** at least one of the data handling units (7a, 7b) is a shift register, provided for serial transferring digital data transmitted on the communication bus (3) from a data input bus connector (9a, 9b) through the shift register to a data output connector (8a, 8b).

4. Communication device (2) according to one of the preceding claims, **characterised in, that** the data processing unit is connected to control inputs of the multiplexers (6) for selectively connecting data sources of the communication devices (2) to selected data sinks of the communication device (2) by control of the data processing unit.

5. Communication device (2) according to one of the preceding claims **characterised in, that** the communication devices (2) comprising an input/output-device, provided for use in a programmed control system.

6. Communication device (2) according to one of the preceding claims, **characterised in, that** the communication device (2) comprising a housing including a base and two opposing sides, said base comprising clamps for connecting the housing to a top-hat rail and said sides carrying the input and output bus connectors (8, 9) connectable to bus connectors of adjacent communication devices (2) mounted on the top-hat rail abutting to said communication device (2).

7. Communication device (2) according to one of the preceding claims **characterised in, that** the communication device (2) is a field bus coupler for controlling data communication over the communication bus (3) with associated communication devices (2) and for communicating with superior control devices connectable to the field bus coupler via a field bus.

8. Communication device (2) according to one of the preceding claims **characterised in, that** the communication devices (2) provided for permuting the downstream line (4a) and the upstream line (4b) of the communication bus (3) in case that a disconnection of the communication bus (3) is detected, wherein the last communication device (2n) in a sequence of communication devices (2) connected to each other by the communication bus (3) is connected to the first communication device (2a) of the sequence of the communication devices (2).

## Patentansprüche

1. Kommunikationsvorrichtung (2) zur Datenkommunikation über einen Kommunikationsbus (3), aufweisend mindestens einen Dateneingangsbusanschluss (9a, 9b), der zum Empfangen von Daten von dem Kommunikationsbus (3) bereitgestellt wird und jeder eine Datenquelle bildet, mindestens einen Datenausgangsbusanschluss (8a, 8b), der zum Übertragen von Daten über den Kommunikationsbus (3) bereitgestellt wird und jeder eine Datensenke bildet, mindestens eine Datenverarbeitungseinheit (7a, 7b) mit mindestens einem Dateneingang, der jeweils eine Datensenke bildet, mindestens einen Datenausgang, der jeweils eine Datenquelle bildet, und eine Mehrzahl von Multiplexer (6), wobei jeder der Datenausgangsbusanschlüsse (8a, 8b) an den Ausgang eines konjugierten Multiplexer (6) angeschlossen ist und wobei ein Multiplexer (6) einer Datensenke zugeordnet wird, **gekennzeichnet dadurch, dass** jede Datenquelle an den Eingang von jedem der genannten Mehrzahl von Multiplexer (6) angeschlossen ist, so dass jede der Datenquellen selektiv mit jedem der Ausgangsbusanschlüsse (8a, 8b) verbunden sein kann durch Steuerung von mindestens einem der Mehrzahl von Multiplexer (6), die genannte Kommunikationsvorrichtung (2) ist zur Kommunikation mit vorgelagerten und nachgelagerten Kommunikationsvorrichtungen (2) durch Anschluss an eine nachgelagerte Leitung (4a) und an eine vorgelagerte Leitung (4b) des Kommunikationsbusses (3), der in einer Ringstruktur eingerichtet ist, bereitgestellt, wobei
- eine erste Datenverarbeitungseinheit (7a) ein nachgelagertes Leitungs-Schieberegister ist, das eine Dateneingabe, die eine Datensenke bildet und eine Datenausgabe, die eine Datenquelle bildet, aufweist,
- eine zweite Datenverarbeitungseinheit (7b) ein vorgelagertes Leitungs-Schieberegister ist, das eine Dateneingabe, die eine Datensenke bildet und eine Datenausgabe, die eine Datenquelle bildet, aufweist,
- eine Datenverarbeitungseinheit ist anschließbar an die erste und die zweite Verarbeitungseinheit (7a, 7b) zum Empfangen oder Übertragen von digitalen Daten in einem Datenstrom, der über den Kommunikationsbus (3) kommuniziert wird,
- ein erster Multiplexer (6a) bereitgestellt wird, der einen Ausgabeport und mindestens vier Eingabeports aufweist, der Ausgabeport des ersten Mulitplexers (6a) ist an den Eingang der ersten Datenverarbeitungseinheit (7a) und an den Ausgang der ersten und zweiten Datenverarbeitungseinheit (7a, 7b) angeschlossen, und die Eingangsbusanschlüsse (9a, 9b) für die nachgelagerte Leitung (4a) und die vorgelagerte Leitung (4b) sind jeweils an einen entsprechenden Eingabeport des ersten Multiplexers (6a) angeschlossen,
- ein zweiter Multiplexer (6c) bereitgestellt wird, der einen Ausgabeport und mindestens vier Eingabeports aufweist, der Ausgabeport des zweiten Mulitplexers (6c) ist an den Eingang der zweiten Datenverarbeitungseinheit (7b) angeschlossen und den Ausgang der ersten und zweiten Datenverarbeitungseinheit (7a, 7b) angeschlossen, und die Eingangsbusanschlüsse (9a, 9b) für die nachgelagerte Leitung (4a) und die vorgelagerte Leitung (4b) sind jeweils an einen entsprechenden Eingabeport des zweiten Mulitplexers (6c) angeschlossen,
- ein dritter Multiplexer (6b) bereitgestellt wird, der einen Ausgabeport und mindestens vier Eingabeports aufweist, der Ausgabeport des dritten Multiplexers (6b) ist an den Ausgangsbusanschluss (8a) für die nachgelagerte Leitung (4a) des Kommunikationsbusses (3) angeschlossen, und der Ausgang der ersten und zweiten Datenverarbeitungseinheit (7a, 7b) und die Eingangsbusanschlüsse (9a, 9b) für die nachgelagerte Leitung (4a) und die vorgelagerte Leitung (4b) sind jeweils an einen entsprechenden Eingabeport des dritten Multiplexers (6b) angeschlossen,
- ein vierter Mulitplexer (6d) bereitgestellt wird, der einen Ausgabeport und mindestens vier Eingabeports aufweist, der Ausgabeport des vierten Multiplexers (6d) ist an den Ausgangsbusanschluss (8b) für die vorgelagerte Leitung (4b) des Kommunikationsbusses (3) angeschlossen, und der Ausgang der ersten und zweiten Datenverarbeitungseinheit (7a, 7b) und die Eingangsbusanschlüsse (9a, 9b) für die nachgelagerte Leitung (4a) und die vorgelagerte Leitung (4b) sind jeweils an einen entsprechenden Eingabeport des vierten Multiplexers (6d) angeschlossen.

2. Kommunikationsvorrichtung (2) nach Anspruch 1, **gekennzeichnet dadurch, dass** jede der Datensenke an den Ausgang eines konjugierten Multiplexers (6) angeschlossen ist, wobei ein Multiplexer (6) zu einer Datensenke zugeordnet wird und dass jede Datenquelle an den Eingang des genannten Multiplexers (6) angeschlossen ist, so dass jeder der Datenquellen selektiv an jeden der Ausgangsbusanschlüsse (8a, 8b) durch Steuerung von mindestens einem Multiplexer (6) angeschlossen werden kann.

3. Kommunikationsvorrichtung (2) nach Anspruch 1 oder 2, **gekennzeichnet dadurch, dass** mindestens eine der Datenverarbeitungseinheiten (7a, 7b) ein Schieberegister ist, das für serielle digitale Übertragung digitaler Daten, die über den Kommunikationsbus (3) von einem Dateneingangsbusanschluss (9a, 9b) durch das Schieberegister an einen Datenausgangsbusanschluss (8a, 8b) übertragen werden, bereitgestellt wird.

4. Kommunikationsvorrichtung (2) nach einem der vorhergehenden Ansprüche, **gekennzeichnet dadurch, dass** die Datenverarbeitungseinheit angeschlossen wird, um Eingänge der Multiplexer (6) zu steuern zum selektiven Anschließen der Datenquellen der Kommunikationsvorrichtungen (2) an die ausgewählten Datensenken der Kommunikationsvorrichtung (2) durch Steuerung der Datenverarbeitungseinheit.

5. Kommunikationsvorrichtung (2) nach einem der vorhergehenden Ansprüche, **gekennzeichnet dadurch, dass** die Kommunikationsvorrichtungen, die eine Eingabe/Ausgabe-vorrichtung aufweisen, für die Verwendung in einem programmierten Steuerungssystem bereitgestellt werden.

6. Kommunikationsvorrichtung (2) nach einem der vorhergehenden Ansprüche, **gekennzeichnet dadurch, dass** die Kommunikationsvorrichtung (2) ein Gehäuse mit einer Basis und zwei gegenüberliegenden Seiten aufweist, die genannte Basis aufweisend Befestigungen zum Anschließen des Gehäuses an eine Hutschiene und die genannten Seiten, die die Eingangs- und Ausgangsbusanschlüsse (8, 9) tragen, die an die Busanschlüsse von angrenzenden Kommunikationsvorrichtungen (2) anschließbar sind, die auf der Hutschiende angebracht sind, die an die genannte Kommunikationsvorrichtung (2) angrenzen.

7. Kommunikationsvorrichtung (2) nach einem der vorhergehenden Ansprüche, **gekennzeichnet dadurch, dass** die Kommunikationsvorrichtung (2) einen Feldbuskoppler zur Steuerung von Datenkommunikation über den Kommunikationsbus (3) mit zugeordneten Kommunikationsvorrichtungen (2) und zur Kommunikation mit übergeordneten Steuerungsvorrichtungen ist, die an den Feldbuskoppler über einen Feldbus anschließbar sind.

8. Kommunikationsvorrichtung (2) nach einem der vorhergehenden Ansprüche, **gekennzeichnet dadurch, dass** die Kommunikationsvorrichtungen (2) zum Permutieren der nachgelagerten Leitung (4a) und der vorgelagerten Leitung (4b) des Kommunikationsbusses (3) bereitgestellt werden im Fall, dass eine Abkopplung des Kommunikationsbusses (3) erkannt wird, wobei die letzte Kommunikationsvorrichtung (2n) in einer Folge von Kommunikationsvorrichtungen (2), die miteinander durch den Kommunikationsbus (3) verbunden sind, an die erste Kommunikationsvorrichtung (2a) der Folge der Kommunikationsvorrichtungen (2) angeschlossen ist.

## Revendications

1. Dispositif de communication (2) pour la communication de données via un bus de communication (3), comprenant au moins un connecteur de bus d'entrée de données (9a, 9b) prévu pour recevoir des données en provenance du bus de communication (3) et chacun formant une source de données, au moins un connecteur de bus de sortie de données (8a, 8b) prévu pour émettre des données via le bus de communication (3) et chacun formant un puits de données, au moins une unité de gestion des données (7a, 7b) comprenant au moins une entrée de données formant chacune un puits de données, au moins une sortie de données formant chacune une source de données, et une pluralité de multiplexeurs (6), dans lequel chacun des connecteurs de bus de sortie de données (8a, 8b) est connecté à la sortie d'un multiplexeur conjugué (6), et dans lequel un multiplexeur (6) est attribué à un puits de données, **caractérisé en ce que** chaque source de données est connectée à l'entrée de chaque multiplexeur de ladite pluralité de multiplexeurs (6), de sorte que chacune des sources de données puisse être sélectivement connectée à chacun des connecteurs de bus de sortie (8a, 8b) par contrôle d'au moins l'un de la pluralité de multiplexeurs (6), ledit dispositif de communication (2) étant prévu pour communiquer avec des dispositifs de communication précédent et suivant (2) par connexion à une ligne aval (4a) et à une ligne amont (4b) du bus de communication (3) établi en topologie en anneaux, dans lequel :
- une première unité de gestion des données (7a) est un registre à décalage de ligne aval comprenant une entrée de données formant un puits de données et une sortie de données formant une source de données,
- une seconde unité de gestion des données (7b) est un registre à décalage de ligne amont comprenant une entrée de données formant un puits de données et une sortie de données formant une source de données,
- une unité de traitement des données peut être connectée à la première et à la seconde unité de gestion (7a, 7b) pour recevoir ou émettre des données numériques dans un flux de données communiquées via le bus de communication (3),
- un premier multiplexeur (6a) est prévu comprenant un port de sortie et au moins quatre ports d'entrée, le port de sortie du premier multiplexeur (6a) étant connecté à l'entrée de la première unité de gestion des données (7a) et la sortie de la première et de la seconde unité de gestion des données (7a, 7b) et les connecteurs de bus d'entrée (9a, 9b) pour la ligne aval (4a) et la ligne amont (4b) étant chacun connecté à un port d'entrée respectif du premier multiplexeur (6a),
- un second multiplexeur (6c) est prévu comprenant un port de sortie et au moins quatre ports d'entrée, le port de sortie du second multiplexeur (6c) étant connecté à l'entrée de la seconde unité de gestion des données (7b) et la sortie de la première et de la seconde unité de gestion des données (7a, 7b) et les connecteurs de bus d'entrée (9a, 9b) pour la ligne aval (4a) et la ligne amont (4b) étant chacun connecté à un port d'entrée respectif du second multiplexeur (6c),
- un troisième multiplexeur (6b) est prévu comprenant un port de sortie et au moins quatre ports d'entrée, le port de sortie du troisième multiplexeur (6b) étant connecté au connecteur de bus de sortie (8a) pour la ligne aval (4a) du bus de communication (3), et la sortie de la première et de la seconde unité de gestion des données (7a, 7b) et les connecteurs de bus d'entrée (9a, 9b) pour la ligne aval (4a) et la ligne amont (4b) étant chacun connecté à un port d'entrée respectif du troisième multiplexeur,
- un quatrième multiplexeur (6d) est prévu comprenant un port de sortie et au moins quatre ports d'entrée, le port de sortie du quatrième multiplexeur (6d) étant connecté au connecteur de bus de sortie (8b) pour la ligne amont (4b) du bus de communication (3), et la sortie de la première et de la seconde unité de gestion des données (7a, 7b) et du connecteur de bus d'entrée (9a, 9b) pour la ligne aval (4a) et la ligne amont (4b) étant chacun connecté à un port d'entrée respectif du quatrième multiplexeur (6d).

2. Dispositif de communication selon la revendication 1, **caractérisé en ce que** chacun du puits de données est connecté à la sortie d'un multiplexeur conjugué (6), un multiplexeur (6) étant attribué à un puits de données, et **en ce que** chaque source de données est connectée à l'entrée desdits multiplexeurs (6) de sorte que chacune des sources de données peut être sélectivement connectée à chacun des connecteurs de bus de sortie (8a, 8b) par contrôle du au moins un multiplexeur (6).

3. Dispositif de communication selon la revendication 1 ou 2, **caractérisé en ce qu'**au moins l'une des unités de traitement (7a, 7b) est un registre à décalage, prévu pour transférer en série des données numériques émises sur le bus de communication (3) depuis un connecteur de bus d'entrée de données (9a, 9b) via le registre à décalage jusqu'à un connecteur de sortie de données (8a, 8b).

4. Dispositif de communication (2) selon l'une des revendications précédentes, **caractérisé en ce que** l'unité de traitement des données est connectée à des entrées de contrôle des multiplexeurs (6) pour connecter sélectivement des sources de données du dispositif de communication (2) à des puits de données sélectionnés du dispositif de communication (2) par contrôle de l'unité de traitement des données.

5. Dispositif de communication (2) selon l'une des revendications précédentes, **caractérisé en ce que** le dispositif de communication (2) comprend un dispositif d'entrée/sortie, prévu pour être utilisé dans un système de contrôle programmé.

6. Dispositif de communication (2) selon l'une des revendications précédentes, **caractérisé en ce que** le dispositif de communication comprend un boitier incluant une base et deux côtés opposés, ladite base comprenant des pinces pour connecter le boitier à un rail d'extrémité supérieure et lesdits côtés supportant les connecteurs de bus d'entrée et de sortie (8, 9) qui peuvent être connectés à des connecteurs de bus de dispositifs de communication adjacents (2) montés sur le rail d'extrémité supérieure venant en butée contre ledit dispositif de communication (2).

7. Dispositif de communication (2) selon l'une des revendications précédentes, **caractérisé en ce que** le dispositif de communication est un coupleur de bus de terrain pour contrôler des communications de données via le bus de communication (3) avec des dispositifs de communication associés pour communiquer avec des dispositifs de contrôle supérieurs pouvant être connectés au coupleur de bus de terrain via un bus de terrain.

8. Dispositif de communication (2) selon l'une des revendications précédentes, **caractérisé en ce que** les dispositifs de communication (2) sont prévus pour permuter la ligne aval (4a) et la ligne amont (4b) du bus de communication (3) en cas de détection d'une déconnexion du bus de communication (3), le dernier dispositif de communication (2n) d'une suite de dispositifs de communication (2) connectés les uns aux autres par le bus de communication (3) étant connecté au premier dispositif de communication (2a) de la suite de dispositifs de communication (2).
